(19) Europäisches Patentamt
European Patent Office
Office européen des brevets

(11) **EP 2 722 721 B1**

(12) **FASCICULE DE BREVET EUROPEEN**

(45) Date de publication et mention
de la délivrance du brevet:
**30.11.2016 Bulletin 2016/48**

(51) Int Cl.:
***G05D 1/06*** *(2006.01)*        ***G08G 5/02*** *(2006.01)*

(21) Numéro de dépôt: **13189235.8**

(22) Date de dépôt: **18.10.2013**

(54) **Procédé d'aide au pilotage d'un aéronef lors d'un atterrissage et système d'aide au pilotage apte à mettre en oeuvre ce procédé**

Steuerungsassistenzverfahren eines Luftfahrzeugs bei der Landung, und Steuerungsassistenzsystem, das in der Lage ist, dieses Verfahren umzusetzen

Method for piloting an aircraft during landing and assisted-piloting system suitable for carrying out said method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2012 FR 1260036**

(43) Date de publication de la demande:
**23.04.2014 Bulletin 2014/17**

(73) Titulaire: **AIRBUS OPERATIONS (S.A.S)**
**31060 Toulouse (FR)**

(72) Inventeurs:
• **Puyou, Guilhem**
**31400 Toulouse (FR)**

• **Perrin, Fabien**
**31000 Toulouse (FR)**
• **Eberle, Matthias**
**31170 Tournefeuille (FR)**
• **Barba, Matthieu**
**31100 Toulouse (FR)**

(74) Mandataire: **Sarraméa, Claude**
**Airbus Operations (SAS)**
**ETRT**
**M0101/1, 316, route de Bayonne**
**31060 Toulouse (FR)**

(56) Documents cités:
**WO-A2-2009/042309        FR-A1- 2 752 051**
**FR-A1- 2 896 073          US-A- 5 593 114**

## Description

La présente invention concerne le domaine de l'atterrissage des aéronefs, notamment des avions de transport, sur une zone d'atterrissage au sol, en particulier sur une piste d'atterrissage. Plusieurs types d'approches peuvent être utilisés pour faire atterrir un aéronef, correspondant à un atterrissage plus ou moins automatique. Les approches possibles sont notamment fonction des équipements disponibles à bord de l'aéronef ainsi que des équipements disponibles au sol. Par exemple, un atterrissage entièrement automatique, de catégorie 3B, suppose un aéroport équipé d'instruments dits ILS (« Instrument Landing System » en anglais) de catégorie 3B et un aéronef comprenant des systèmes compatibles avec ces instruments ILS. Lorsqu'un atterrissage automatique n'est pas possible, le pilote de l'aéronef doit voler un atterrissage en pilotage manuel. Pour un tel atterrissage l'aéronef est généralement guidé de façon automatique, suivant son plan de vol, jusqu'à une hauteur dite « hauteur de décision », puis si la visibilité est suffisante à cette hauteur de décision, le pilote contrôle l'aéronef manuellement jusqu'à son atterrissage. La présente invention concerne plus particulièrement la phase correspondant au vol de l'aéronef entre son passage à cette hauteur de décision et son atterrissage.

Lors du guidage automatique de l'aéronef avant qu'il atteigne la hauteur de décision, les systèmes de l'aéronef réalisent son guidage le long d'une trajectoire prédéterminée en utilisant soit un système de positionnement relatif extérieur (notamment de type ILS) qui fournit directement un écart de trajectoire, soit une information de position absolue de l'aéronef disponible à bord de celui-ci ainsi que les coordonnées géographiques de la piste d'atterrissage. Cette position absolue de l'aéronef peut notamment être fournie par une centrale inertielle ou par un système de type VOR («Very High Frequency Omnidirectional Range » en anglais) ou de type GNSS (« Global Navigation Satellite System » en anglais), en particulier de type GPS (« Global Positioning System » en anglais) ou Galileo. Un tel système GNSS peut être augmenté ou non d'un recalage local, par exemple en utilisant un réseau WAAS (« Wide Area Augmentation System » en anglais) ou EGNOS (« European Geostationary Navigation Overlay Service » en anglais). Comme tout système de mesure, ces systèmes fournissent la position de l'aéronef avec une précision déterminée et il existe donc une erreur de position correspondant à la différence entre la position réelle de l'aéronef et la valeur de l'information de position disponible à bord de celui-ci. Par conséquent, lors du passage, à la hauteur de décision, d'un guidage automatique à un guidage manuel de l'aéronef, il existe une erreur de position entre la position réelle de l'aéronef et sa position théorique sur ladite trajectoire prédéterminée. Il en résulte l'inconvénient que lors du pilotage manuel jusqu'à l'atterrissage, le pilote doit faire des manoeuvres pour compenser cette erreur de position afin de faire atterrir correctement l'aéronef.

Cela accroît la charge de travail du pilote.

Le document US5 593 114 A décrit un système d'aide à l'atterrissage d'un aéronef dans lequel un pilote dispose de moyens lui permettant d'afficher un curseur sur un écran où est également affichée une piste d'atterrissage. Ce curseur comporte un symbole cruciforme correspondant à un point de contact souhaité de l'aéronef avec le sol, ainsi qu'une ligne correspondant à une trajectoire de roulage au sol de l'aéronef. Le pilote dispose d'une interface lui permettant de régler la position et l'orientation du curseur sur la piste d'atterrissage de façon à définir un pseudo axe d'approche ILS. Le système calcule des erreurs angulaires entre la position courante de l'aéronef et ce pseudo axe d'approche ILS. Ces erreurs angulaires, similaires aux erreurs angulaires déterminées par un système ILS classique, sont utilisées par le système de guidage de l'aéronef pour réaliser un atterrissage automatique.

La présente invention a pour objet de remédier aux inconvénients précités. Elle concerne un procédé d'aide au pilotage d'un aéronef lors d'un atterrissage sur une zone d'atterrissage au sol, cet aéronef comportant au moins un écran de visualisation dans son cockpit ainsi que des moyens d'interface homme machine associés à cet écran. Ce procédé est remarquable en ce qu'il comporte les étapes suivantes :

A) lors d'une phase correspondant à cet atterrissage, au cours de laquelle ladite zone d'atterrissage au sol est visible depuis l'aéronef :

A1) afficher, sur ledit écran, une cible correspondant à cet atterrissage, en superposition d'une vue de l'extérieur de l'aéronef, ladite vue comportant une vue d'au moins une partie de la zone d'atterrissage au sol ;
A2) recevoir un ordre de modification de la cible par un pilote de l'aéronef,
grâce aux moyens d'interface homme machine associés à cet écran et
afficher sur cet écran la cible ainsi modifiée ;
A3) recevoir un ordre de validation d'une valeur de la cible par un pilote de l'aéronef, grâce aux moyens d'interface homme machine associés à cet écran ;

B) déterminer de façon automatique une trajectoire de vol de l'aéronef en fonction au moins de la position relative de l'aéronef par rapport à la valeur de la cible validée par le pilote à l'étape A3) et mémoriser cette trajectoire ; et
C) guider l'aéronef le long de la trajectoire mémorisée à l'étape B).

Ce procédé permet donc à un pilote de définir une valeur de la cible en superposition de la vue de l'extérieur de l'aéronef, puis de valider cette valeur. Ainsi, la cible est positionnée sur l'écran relativement à la vue de l'extérieur de l'aéronef, donc relativement à la zone d'atterrissage. Cette vue de l'extérieur de l'aéronef étant une vue depuis la position courante de l'aéronef, la valeur de la cible validée par le pilote est donc référencée par rapport à la position courante de l'aéronef. Par conséquent la trajectoire déterminée à l'étape B) permet à l'aéronef d'atterrir conformément à cette cible, sans être perturbé par l'erreur de position de l'aéronef lorsque celui-ci se trouve à la hauteur de décision. La trajectoire étant mémorisée, il suffit de guider l'aéronef le long de celle-ci de façon à réaliser un atterrissage conforme à la valeur de la cible validée par le pilote. Cette trajectoire mémorisée est insensible aux mouvements de l'aéronef après ladite validation d'une valeur de la cible par le pilote. Cette trajectoire s'étend entre la position courante de l'aéronef lors de la validation de la cible par le pilote à l'étape A3) et la position de la cible validée par le pilote.

De préférence, la cible comprend un point cible au sol. De façon avantageuse, elle comprend en outre un axe d'une trajectoire de roulage au sol et/ou la pente FPA (« Flight Path Angle » en anglais) du dernier segment d'approche du point cible au sol.

Dans un mode préféré de réalisation, l'écran est un dispositif de visualisation tête haute de type HUD (« Head Up Display » en anglais). Ainsi, la vue de l'extérieur de l'aéronef correspond à ce que voit le pilote, à l'extérieur de l'aéronef, lorsqu'il regarde à travers cet écran de type HUD. Il n'est donc pas nécessaire d'acquérir et d'afficher cette vue à l'aide de moyens embarqués à bord de l'aéronef.

De façon avantageuse, la zone d'atterrissage au sol correspond à une piste d'atterrissage.

Dans un mode de réalisation de l'invention, la valeur de la cible affichée à l'étape A1) est déterminée en fonction de caractéristiques de la piste d'atterrissage. Ces caractéristiques peuvent notamment correspondre à des coordonnées de la piste d'atterrissage.

Dans un autre mode de réalisation, la valeur de la cible affichée à l'étape A1) est déterminée en fonction de la route courante de l'aéronef.

Avantageusement, l'étape A2 est réalisée de façon itérative. Le pilote peut ainsi modifier la cible jusqu'à ce qu'elle corresponde à l'atterrissage souhaité.

De façon préférée, la valeur de la cible validée par le pilote à l'étape A3) est mémorisée et, pendant l'étape C), une cible correspondant à ladite valeur mémorisée est affichée en superposition de la vue de l'extérieur de l'aéronef. Ainsi, l'affichage de la cible est maintenu après la validation de ladite valeur de la cible par le pilote à l'étape A3. La cible ainsi affichée correspondant à la valeur de la cible validée à l'étape A3, le pilote peut ainsi vérifier que la valeur de la cible qu'il a validée est correctement positionnée par rapport à la zone d'atterrissage souhaitée.

Avantageusement encore, les étapes A2), A3) et B) sont répétées au cours de l'étape C). Ainsi, si le pilote se rend compte pendant le guidage de l'aéronef le long de la trajectoire calculée à l'étape B) que la cible ne correspond pas de façon suffisamment précise à l'atterrissage souhaité, il peut encore modifier cette cible.

Selon un mode de réalisation, la trajectoire déterminée et mémorisée à l'étape B) est définie dans un repère terrestre. Selon un autre mode de réalisation, la trajectoire déterminée et mémorisée à l'étape B) est définie dans un repère référencé par rapport à la position de l'aéronef lors de la validation de la valeur de la cible par le pilote à l'étape A3).

L'invention est aussi relative à un système d'aide au pilotage d'un aéronef, ledit système comportant au moins un écran de visualisation dans le cockpit de l'aéronef ainsi que des moyens d'interface homme machine associés à cet écran. Ce système d'aide au pilotage est remarquable en ce qu'il comporte :

- un dispositif de dialogue avec un pilote, ce dispositif étant configuré pour :

  • afficher sur cet écran, lors d'un atterrissage de l'aéronef sur une zone d'atterrissage au sol visible depuis l'aéronef, une cible correspondant à cet atterrissage, en superposition d'une vue de l'extérieur de l'aéronef, ladite vue comportant une vue d'au moins une partie de la zone d'atterrissage au sol ;
  • recevoir un ordre de modification de la cible par un pilote de l'aéronef, grâce aux moyens d'interface homme machine, et afficher la cible ainsi modifiée ; et
  • recevoir un ordre de validation d'une valeur de la cible par un pilote de l'aéronef, grâce aux moyens d'interface homme machine ;

- une mémoire ;
- des moyens de calcul configurés pour déterminer de façon automatique une trajectoire de vol de l'aéronef en fonction au moins de la position relative de l'aéronef par rapport à la valeur de la cible validée par le pilote et pour enregistrer cette trajectoire dans ladite mémoire ; et
- des moyens de guidage configurés pour guider l'aéronef le long de la trajectoire de vol enregistrée dans ladite mémoire.

Dans un mode préféré de réalisation, l'écran est un dispositif de visualisation tête haute de type HUD.

Dans un mode de réalisation de l'invention, les moyens de guidage comportent un directeur de vol configuré pour commander automatiquement l'affichage, dans le cockpit, d'indications permettant à un pilote de guider l'aéronef le long de la trajectoire de vol enregistrée dans ladite mémoire. Dans un autre mode de réalisation, ces moyens de guidage comportent un pilote automatique configuré pour guider automatiquement l'aéronef le long de la trajectoire de vol enregistrée dans ladite mémoire. Cela permet de réaliser l'atterrissage de façon entièrement automatique et donc de diminuer la charge de travail du pilote. Cet atterrissage peut être réalisé de façon automatique même si la zone d'atterrissage n'est pas une piste d'atterrissage, ou encore s'il s'agit d'une piste d'atterrissage dont les coordonnées ne sont pas disponibles à bord de l'aéronef.

L'invention concerne également un aéronef comportant un système d'aide au pilotage tel que décrit précédemment.

L'invention sera mieux comprise à la lecture de la description qui suit et à l'examen des figures annexées.

La figure 1 représente, en schéma synoptique, un système d'aide au pilotage d'un aéronef conforme à un mode de réalisation de l'invention.

La figure 2 représente, de façon schématique, une cible au sol conforme à l'invention, vue en superposition d'une piste d'atterrissage.

La figure 3 représente un affichage sur un écran d'un aéronef qui permet de mieux comprendre l'invention.

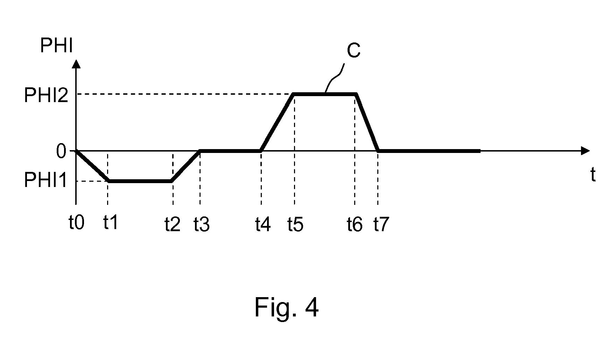

Le figure 4 illustre une méthode de détermination de la trajectoire de l'aéronef jusqu'à son atterrissage.

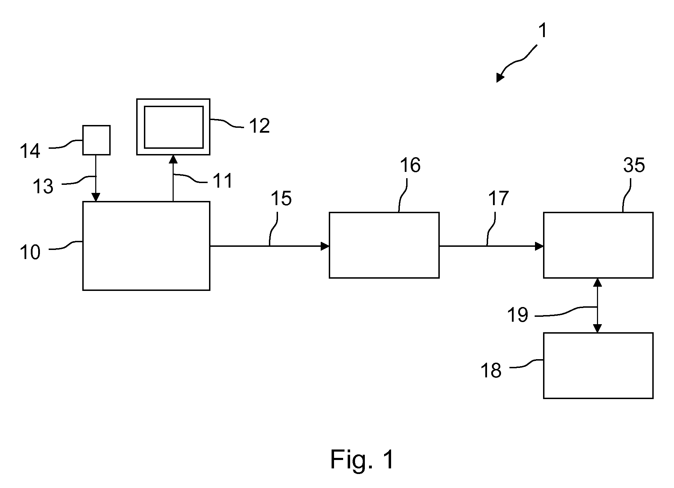

Le système d'aide au pilotage 1 représenté sur la figure 1 comporte un dispositif de dialogue 10 avec un opérateur de l'aéronef, en particulier avec un pilote. Ce dispositif de dialogue 10 est relié, par une liaison 11, à un écran 12 du poste de pilotage de l'aéronef. Il est aussi relié, par une liaison 13, à des moyens d'interface homme machine 14, associés à l'écran 12. Le dispositif de dialogue 10 est également relié, par une liaison 15, à des moyens 16 de calcul d'une trajectoire de l'aéronef, lesquels sont reliés, par une liaison 17, à une mémoire 35. Le système comporte également des moyens 18 de guidage de l'aéronef, lesquels sont reliés, par une liaison 19, à la mémoire 35.

A titre d'exemple non limitatif, le dispositif de dialogue 10 peut correspondre à une application chargée dans un calculateur avionique modulaire de type IMA (« Integrated Modular Avionics » en anglais). Les moyens 16 de calcul d'une trajectoire peuvent aussi correspondre à une application chargée dans un calculateur avionique modulaire. L'application correspondant au dispositif de dialogue 10 et l'application correspondant aux moyens 16 de calcul d'une trajectoire peuvent soit être chargées dans le même calculateur avionique modulaire, soit être chargées dans des calculateurs avioniques modulaires distincts. De façon alternative, les moyens 16 de calcul d'une trajectoire peuvent correspondre à un calculateur de gestion de vol de type FMS (« Flight Management System » en anglais) comportant une fonction de calcul de trajectoire. Les moyens 18 de guidage de l'aéronef peuvent correspondre à un calculateur de guidage de l'aéronef de type FGS (« Flight Guidance System » en anglais) ou de type FGCS (« Flight Guidance and Control System » en anglais).

Lors d'une approche en vue de l'atterrissage de l'aéronef, autre qu'un atterrissage automatique, l'aéronef est généralement guidé automatiquement, jusqu'à une hauteur de décision, le long d'une trajectoire prédéterminée. Lorsqu'il arrive à cette hauteur de décision, ou sensiblement avant celle-ci, si le pilote peut voir, depuis l'aéronef, la zone d'atterrissage prévue, il peut décider de poursuivre l'atterrissage. Sinon, il doit interrompre l'atterrissage en utilisant une trajectoire prévue à cet effet. S'il décide de poursuivre l'atterrissage, le système d'aide au pilotage selon l'invention peut l'aider lors dudit atterrissage.

Dans la majorité des cas, la zone d'atterrissage est une piste d'atterrissage d'un aéroport. Toutefois, l'invention peut aussi s'appliquer dans le cas d'une zone d'atterrissage autre qu'une piste d'atterrissage, par exemple une zone non spécifique à l'atterrissage d'aéronefs qui pourrait être utilisée pour un atterrissage d'urgence ou pour un atterrissage improvisé.

L'écran 12 est de préférence un dispositif de visualisation tête haute de type HUD. Ainsi, le pilote peut voir l'extérieur de l'aéronef par transparence à travers cet écran. Les symboles affichés sur cet écran sont ainsi affichés en superposition de la vue de l'extérieur de l'aéronef que le pilote peut avoir à travers cet écran de type HUD. La zone d'atterrissage doit être visible par le pilote, à la hauteur de décision, pour pouvoir poursuivre l'atterrissage. Par conséquent, au moins une partie de ladite zone d'atterrissage fait partie de la vue de l'extérieur de l'aéronef que le pilote peut avoir à travers cet écran de type HUD.

Dans une première étape, le dispositif de dialogue 10 détermine une valeur initiale d'une cible correspondant à cet atterrissage et envoie des informations relatives à cette cible, par la liaison 11, vers l'écran 12 qui affiche la cible ainsi déterminée. Le pilote peut ainsi voir cette cible en superposition de la vue de l'extérieur de l'aéronef.

Dans une deuxième étape, le pilote peut utiliser les moyens d'interface homme machine 14 pour modifier la cible sur l'écran 12. Pour cela, le dispositif de dialogue 10 reçoit des commandes provenant des moyens d'interface homme machine 14 par la liaison 13 et détermine une nouvelle valeur de la cible conforme aux actions du pilote sur les moyens d'interface homme machine 14. Le dispositif de dialogue 10 envoie, par la liaison 11, cette nouvelle valeur de la cible à l'écran 12 qui affiche la cible ainsi modifiée par le pilote. Le pilote peut modifier la cible sur l'écran jusqu'à ce que celle-ci soit compatible avec l'atterrissage qu'il souhaite réaliser.

Dans une troisième étape, le pilote peut utiliser les moyens d'interface homme machine 14 pour valider la cible modifiée à la deuxième étape.

De préférence, la cible comporte un point cible au sol. Ce point cible peut en particulier correspondre à l'intersection entre le sol et le dernier segment d'un axe d'approche de l'aéronef sur la zone d'atterrissage. De préférence encore, la cible comporte en outre un axe d'une trajectoire de roulage au sol prévue pour le roulage de l'aéronef immédiatement après son contact avec le sol. La direction de cet axe de roulage est par exemple repérée par sa route TRK (« track » en anglais), qui correspond à l'angle entre cet axe et le nord. La cible peut également comporter la pente FPA du dernier segment de l'axe d'approche de l'aéronef sur la zone d'atterrissage. Le point cible au sol correspond à l'intersection entre ledit dernier segment de l'axe d'approche et une droite passant par l'axe de la trajectoire de roulage au sol. Ces trois paramètres de la cible (point cible au sol, axe d'une trajectoire de roulage au sol, pente du dernier segment de l'axe d'approche) permettent, lorsqu'ils sont fixés, de maîtriser la trajectoire finale d'atterrissage de l'aéronef. Dans le cas où la cible comporte ces trois paramètres, à la deuxième étape le pilote déplace le point cible au sol en utilisant les moyens d'interface homme machine 14, par exemple une souris, un trackball, un joystick, un pointeur, une interface tactile ou des flèches d'un clavier, de façon à amener ce point cible à la position souhaitée sur l'écran. Encore à l'aide desdits moyens d'interface homme machine, il peut modifier l'orientation de l'axe de la trajectoire de roulage. Il peut aussi modifier la valeur de la pente en la saisissant à l'aide d'un clavier faisant partie desdits moyens d'interface homme machine.

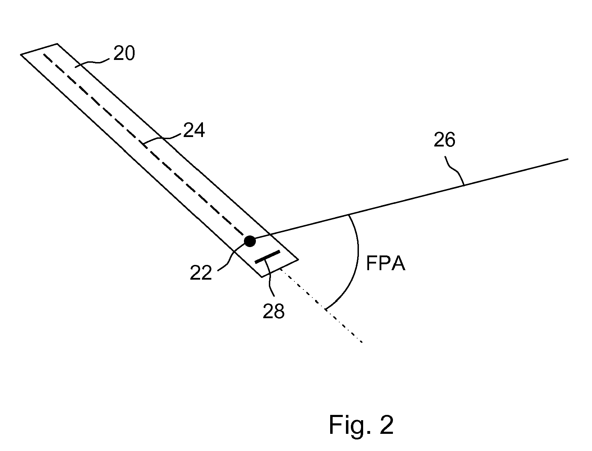

Lorsque la zone d'atterrissage est une piste d'atterrissage, la valeur initiale de la cible déterminée à la première étape peut être positionnée sur une position théorique de la piste d'atterrissage. Plus particulièrement, comme représenté sur la figure 2, le point cible au sol 22 correspondant à la valeur initiale de la cible peut être un point situé sensiblement à proximité d'un seuil de piste 28 de ladite piste d'atterrissage 20 et l'axe 24 de la trajectoire de roulage au sol peut correspondre à l'axe longitudinal de ladite piste d'atterrissage. La valeur de la pente FPA du dernier segment 26 de l'axe d'approche peut quant à elle correspondre à une valeur d'angle de pente compatible avec un atterrissage sur cette piste d'atterrissage. Cette valeur peut par exemple être égale à 3 degrés.

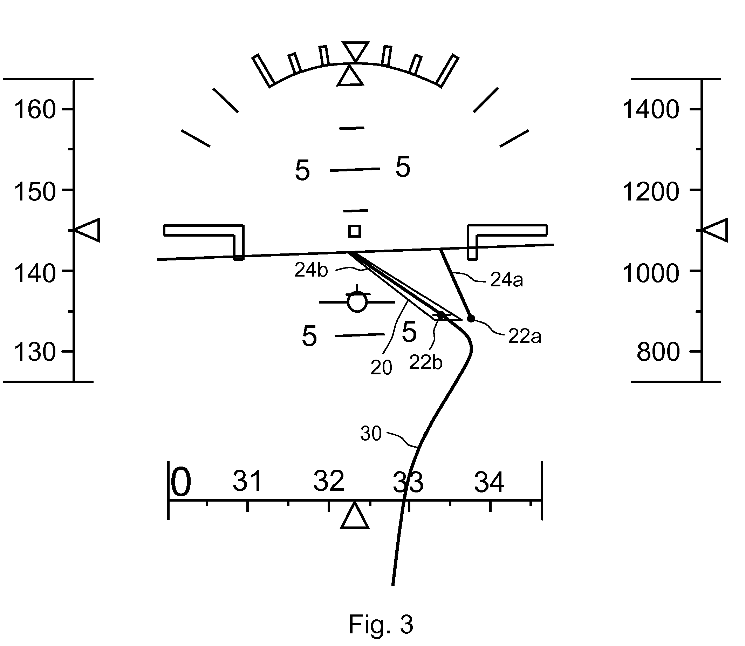

Compte tenu de l'erreur de position de l'aéronef précitée, la position théorique de la piste d'atterrissage ne correspond pas parfaitement à la position réelle de ladite piste d'atterrissage sur la vue de l'extérieur de l'aéronef que le pilote peut avoir par transparence à travers l'écran 12 de type HUD. Il en résulte que la valeur initiale de la cible, telle qu'affichée sur l'écran, peut être décalée de la piste d'atterrissage. Par exemple, comme représenté sur la figure 3, la position initiale du point cible au sol 22a peut être située à l'extérieur de la piste d'atterrissage 20 telle que vue par le pilote à travers l'écran 12 et la valeur initiale de l'axe de la trajectoire de roulage 24a peut ne pas être parallèle à l'axe longitudinal de la piste 20. Dans un tel cas, à la deuxième étape, le pilote déplace le point cible au sol 22a à l'aide des moyens d'interface homme machine 14, jusqu'à l'amener au point 22b proche du seuil de piste de la piste d'atterrissage 20. Toujours à l'aide desdits moyens d'interface homme machine, il modifie alors l'orientation de l'axe de la trajectoire de roulage 24a pour l'amener à la position de l'axe 24b parallèle à l'axe longitudinal de la piste d'atterrissage 20.

Dans d'autres cas, par exemple lorsque l'aéronef ne dispose pas d'informations sur la piste d'atterrissage, lorsque la zone d'atterrissage n'est pas une piste d'atterrissage, ou encore si le pilote choisit une telle option, la valeur initiale de la cible peut être fonction de la route courante de l'aéronef. Le point cible au sol peut alors correspondre à l'intersection avec le sol d'un axe d'approche courant de l'aéronef. L'axe de la trajectoire de roulage peut correspondre à la poursuite en projection au sol, après le point cible au sol, de cet axe d'approche. La valeur de la pente FPA du dernier segment de l'axe d'approche est soit choisie égale à une valeur prédéterminée, de préférence égale à 3 degrés, soit choisie égale à la valeur de la pente courante de l'aéronef.

Après la validation de la cible par le pilote à la troisième étape, le dispositif de dialogue 10 transmet, par la liaison 15, la valeur de la cible ainsi validée vers les moyens 16 de calcul d'une trajectoire de l'aéronef. Ces moyens 16 de calcul déterminent alors une trajectoire 30 susceptible d'être suivie par l'aéronef et permettant à celui-ci de réaliser un atterrissage conforme à la cible ainsi validée, en partant de sa position courante. De façon avantageuse, la trajectoire 30 déterminée par les moyens 16 peut être affichée sur l'écran 12 comme représenté sur la figure 3.

Les moyens 16 de calcul déterminent la trajectoire 30 en fonction de la position relative de l'aéronef par rapport à la cible validée par le pilote et dont ils ont reçu la valeur par la liaison 15. Etant donné que la cible validée par le pilote est positionnée sur l'écran en superposition d'une vue d'au moins une partie de la zone d'atterrissage depuis la position courante de l'aéronef, la valeur de ladite cible peut être représentée par les coordonnées angulaires sous lesquelles le pilote voit ladite cible depuis l'aéronef. Ces coordonnées angulaires peuvent notamment être exprimées par un angle de cap et un angle d'azimut. La valeur de la cible transmise par le dispositif de dialogue 10 vers les moyens 16 de calcul, par la liaison 15, peut notamment correspondre à ces deux angles. Outre ces deux angles, une troisième information est nécessaire pour définir la position relative de l'aéronef par rapport à la cible. Cette troisième information peut notamment être :

- la distance entre l'aéronef et la cible ; ou
- la hauteur relative de l'aéronef par rapport à la cible.

La distance entre l'aéronef et la cible peut être mesurée au moyen d'un système de mesure embarqué à bord de l'aéronef. Ce système de mesure peut utiliser un laser orientable, par exemple de type LIDAR (« Light Detection And Ranging » en anglais). Pour mesurer ladite distance, le faisceau lumineux émis par le laser est orienté vers la cible, par exemple en utilisant les angles de cap et d'azimut précités.

La hauteur relative de l'aéronef par rapport à la cible peut être déterminée au moyen d'un radio altimètre lorsque le sol est sensiblement horizontal entre la position courante de l'aéronef et la position de la cible. Lorsque la zone d'atterrissage est une piste d'atterrissage d'un aéroport, il est également possible d'utiliser une mesure de pression barométrique différentielle si l'aéroport est équipé d'un système de mesure de pression barométrique dont des données de pression sont transmises à l'aéronef. La différence entre une pression barométrique mesurée à bord de l'aéronef et la pression barométrique mesurée sur l'aéroport permet de calculer la hauteur relative de l'aéronef par rapport à l'aéroport, donc par rapport à la cible. Lorsque l'aéronef dispose d'une base de données de terrain, notamment embarquée à bord de l'aéronef, et si l'altitude courante de l'aéronef est connue, à bord de l'aéronef, de façon suffisamment précise, ladite hauteur relative peut être calculée par différence entre ladite altitude courante de l'aéronef et l'altitude de la cible issue de la base de données.

De façon alternative, plutôt que d'utiliser une troisième information telle que la distance entre l'aéronef et la cible ou la hauteur relative de l'aéronef par rapport à la cible pour définir la position relative de l'aéronef par rapport à la cible, il est possible d'utiliser une double validation de la cible par le pilote, à deux instants donnés. Dans ce cas, le pilote valide une première valeur de la cible à un premier instant, conformément à la troisième étape. A un deuxième instant, postérieur à ce premier instant, le pilote corrige la cible en réitérant la deuxième étape, puis il valide une nouvelle valeur de la cible à ce deuxième instant, conformément à la troisième étape. La distance parcourue par l'aéronef entre ces deux instants étant connue, la position relative de l'aéronef par rapport à la cible est déterminée par triangulation en utilisant cette distance parcourue par l'aéronef ainsi que les coordonnées angulaires, par exemple les angles de cap et d'azimut, à chacun des premier et deuxième instants.

Pour déterminer la trajectoire 30 permettant à l'aéronef de rejoindre la cible depuis sa position courante, les moyens 16 de calcul peuvent utiliser toute méthode classique de calcul de trajectoire. A titre d'exemple non limitatif, ils peuvent utiliser une méthode d'optimisation d'une trajectoire à deux virages et à vitesse constante telle qu'illustrée par la figure 4. Sur cette figure, l'angle PHI représenté sur l'axe vertical correspond à l'angle de roulis de l'aéronef. L'axe horizontal représente le temps t. La courbe C représente l'évolution de l'angle PHI en fonction du temps t. L'aéronef est considéré initialisé ailes à plat, c'est à dire PHI=0 à un instant initial t0. Les moyens 16 de calcul déterminent une première trajectoire continue et dérivable une fois, en considérant une vitesse infinie de mise en virage de l'aéronef. Par conséquent, les instants t0, t2, t4, et t6 de début d'inclinaison latérale de l'aéronef et les instants respectifs t1, t3, t5, et t7 de fin d'inclinaison latérale de l'aéronef vérifient les relations suivantes :

$$t0=t1 \; ; \; t2=t3 \; ; \; t4=t5 \; et \; t6=t7.$$

Les moyens 16 de calcul réalisent alors un calcul géométrique pour en déduire les rayons des deux virages, auxquels correspondent respectivement les angles de roulis PHI1 et PHI2, ainsi que l'ouverture angulaire des arcs de cercle réalisés (et donc les instants t1, t3, t5 et t7) en minimisant la distance de rejointe de l'axe final tout en contraignant les angles PHI1 et PHI2 à ne pas dépasser les limites de performance de l'aéronef. Après avoir calculé cette première trajectoire, les moyens 16 de calcul déterminent la trajectoire 30 de vol de l'aéronef en calculant les temps nécessaires pour passer d'une inclinaison de l'aéronef à une autre (et donc les temps t1, t3, t5 et t7) de façon à ne pas dépasser le taux de roulis maximum que peut voler l'aéronef. Cette méthode permet d'optimiser les temps et les inclinaisons pour rester le plus proche possible de la première trajectoire tout en respectant les contraintes de performance de l'aéronef. La trajectoire de vol 30 est déterminée en temps réel, c'est-à-dire pendant le vol de l'aéronef après la validation de la valeur de la cible par le pilote à l'étape A3).

Une fois la trajectoire 30 déterminée, les moyens 16 transmettent cette trajectoire, par la liaison 17, vers la mémoire 35 qui enregistre alors cette trajectoire. Les moyens 18 de guidage de l'aéronef réalisent alors le guidage de l'aéronef le long de ladite trajectoire.

De façon avantageuse, cette trajectoire est définie dans un repère. Selon un premier mode de réalisation, ce repère est un repère terrestre qui peut être un repère géographique ou un repère référencé par rapport à ladite cible dont la valeur a été validée par le pilote. La position de l'aéronef relativement à la cible, et par suite dans ce repère, est connue lors de la validation de ladite cible par le pilote. Les mouvements de l'aéronef étant connus à bord de l'aéronef (grâce aux systèmes de mesure inertiels, GPS...), la position de l'aéronef dans ce repère peut être déterminée à tout moment pendant l'atterrissage. Cela permet, lors de l'étape C), de calculer des erreurs de position entre la position courante de l'aéronef (exprimée dans ce repère) et sa position théorique sur la trajectoire mémorisée, de façon à guider l'aéronef le long de ladite trajectoire jusqu'à son atterrissage.

Selon un deuxième mode de réalisation, ce repère est un repère référencé par rapport à la position de l'aéronef lors de la validation de la valeur de la cible par le pilote à l'étape A3). La position de l'aéronef relativement à la cible étant connue lors de la validation de ladite cible par le pilote, il en résulte que la position de la cible dans ce repère est connue. Les mouvements de l'aéronef étant connus à bord de l'aéronef, la position de l'aéronef dans ce repère peut être déterminée à tout moment pendant l'atterrissage. Cela permet, lors de l'étape C), de calculer des erreurs de position entre la position courante de l'aéronef (exprimée dans ce repère) et sa position théorique sur la trajectoire mémorisée, de façon à guider l'aéronef le long de ladite trajectoire jusqu'à son atterrissage.

De préférence, la valeur de la cible validée par le pilote est mémorisée dans une mémoire du système. Ainsi, après sa validation par le pilote, le système continue à afficher cette cible validée et mémorisée, en superposition de la vue de l'extérieur de l'aéronef. Cette cible étant mémorisée, le système calcule son affichage de façon à ce que la position affichée de ladite cible ne change pas par rapport à la zone d'atterrissage, quels que soient les mouvements de l'aéronef. Ainsi, après la validation d'une valeur de la cible à l'étape A3), dans la mesure où ladite valeur validée est correcte, le pilote n'a pas besoin de modifier la position de la cible affichée, cela jusqu'à l'atterrissage de l'aéronef. Avantageusement, la valeur de la cible ainsi mémorisée est définie dans ledit repère correspondant au premier mode ou au deuxième mode de réalisation précités.

Dans un mode préféré de réalisation de l'invention, les moyens 18 de guidage comportent un pilote automatique qui permet un guidage automatique de l'aéronef le long de la trajectoire déterminée par les moyens 16, jusqu'à son atterrissage. Le pilote est ainsi déchargé du guidage de l'aéronef entre son passage à la hauteur de décision et l'atterrissage, ce qui lui permet de se consacrer à d'autres tâches.

Dans un autre mode de réalisation, les moyens 18 de guidage comportent un directeur de vol qui permet d'assister le pilote lors de l'atterrissage. Ainsi, le pilote n'a qu'à suivre la trajectoire déterminée de façon automatique par les moyens 16, en suivant les indications du directeur de vol. Cela permet encore de diminuer sa charge de travail, même si celle-ci est plus élevée que dans le cas de l'utilisation d'un pilote automatique.

L'origine de la trajectoire 30 correspond à la position courante de l'aéronef au moment de la validation de la cible par le pilote à la troisième étape. Comme expliqué supra, l'invention permet de s'affranchir de l'erreur sur cette position correspondant à l'origine de la trajectoire. Lors du guidage de l'aéronef le long de la trajectoire 30, la position de l'aéronef peut par exemple être calculée par double intégration d'informations d'accélération fournies par des centrales inertielles de l'aéronef. Cela permet de calculer la position de l'aéronef, par rapport à la position d'origine de la trajectoire, à tout instant pendant le guidage le long de ladite trajectoire, avec une dérive très réduite. La durée du guidage le long de la trajectoire 30 est suffisamment faible (de l'ordre de la minute) pour que l'erreur de position résultant de cette dérive reste compatible avec la précision nécessaire au guidage de l'aéronef.

**Revendications**

1. Procédé d'aide au pilotage d'un aéronef lors d'un atterrissage sur une zone d'atterrissage au sol, cet aéronef comportant au moins un écran de visualisation (12) dans son cockpit ainsi que des moyens d'interface homme machine (14) associés à cet écran, **caractérisé en ce qu'**il comporte les étapes suivantes :

   A) lors d'une phase correspondant à cet atterrissage, au cours de laquelle ladite zone d'atterrissage au sol est visible depuis l'aéronef :

      A1) afficher, sur ledit écran, une cible correspondant à cet atterrissage, en superposition d'une vue de l'extérieur de l'aéronef, ladite vue comportant une vue d'au moins une partie de la zone d'atterrissage au sol ;
      A2) recevoir un ordre de modification de la cible par un pilote de l'aéronef, grâce aux moyens d'interface homme machine (14) associés à cet écran et afficher sur cet écran la cible ainsi modifiée ;
      A3) recevoir un ordre de validation d'une valeur de la cible par un pilote de l'aéronef, grâce aux moyens d'interface homme machine (14) associés à cet écran ;

   B) déterminer de façon automatique une trajectoire de vol (30) de l'aéronef en fonction au moins de la position relative de l'aéronef par rapport à la valeur de la cible validée par le pilote à l'étape A3) et mémoriser cette trajectoire ; et
   C) guider l'aéronef le long de la trajectoire mémorisée à l'étape B).

2. Procédé d'aide au pilotage selon la revendication 1, dans lequel la cible comprend :

   - un point cible au sol ;
   - un axe d'une trajectoire de roulage au sol ; et/ou
   - la pente (FPA) du dernier segment d'approche du point cible au sol.

3. Procédé d'aide au pilotage selon l'une quelconque des revendications précédentes, dans lequel l'écran (12) est un dispositif de visualisation tête haute de type HUD.

4. Procédé d'aide au pilotage selon l'une quelconque des revendications précédentes, dans lequel la zone d'atterrissage au sol correspond à une piste d'atterrissage.

5. Procédé d'aide au pilotage selon la revendication 4, dans lequel la valeur de la cible affichée à l'étape A1) est déterminée en fonction de caractéristiques de la piste d'atterrissage.

6. Procédé d'aide au pilotage selon l'une quelconque des revendications 1 à 4, dans lequel la valeur de la cible affichée à l'étape A1) est déterminée en fonction de la route courante de l'aéronef.

7. Procédé d'aide au pilotage selon l'une quelconque des revendications précédentes, dans lequel l'étape A2 est réalisée de façon itérative.

8. Procédé d'aide au pilotage selon l'une quelconque des revendications précédentes, dans lequel :

   - la valeur de la cible validée par un pilote à l'étape A3) est mémorisée ; et
   - pendant l'étape C), une cible correspondant à ladite valeur mémorisée est affichée en superposition de la vue de l'extérieur de l'aéronef.

9. Procédé d'aide au pilotage selon l'une quelconque des revendications précédentes, dans lequel les étapes A2), A3) et B) sont répétées au cours de l'étape C).

10. Procédé d'aide au pilotage selon l'une quelconque des revendications précédentes, dans lequel la trajectoire déterminée et mémorisée à l'étape B) est définie dans un repère terrestre.

11. Système d'aide au pilotage (1) d'un aéronef, ledit système comportant au moins un écran (12) de visualisation dans le cockpit de l'aéronef ainsi que des moyens d'interface homme machine (14) associés à cet écran, **caractérisé en ce que** ledit système d'aide au pilotage comporte :

   - un dispositif de dialogue (10) avec un pilote, ce dispositif étant configuré pour:

     . afficher sur cet écran (12), lors d'un atterrissage de l'aéronef sur une zone d'atterrissage au sol visible depuis l'aéronef, une cible correspondant à cet atterrissage, en superposition d'une vue de l'extérieur de l'aéronef, ladite vue comportant une vue d'au moins une partie de la zone d'atterrissage au sol ;
     . recevoir un ordre de modification de la cible par un pilote de l'aéronef, grâce aux moyens d'interface homme machine (14), et afficher la cible ainsi modifiée ; et
     . recevoir un ordre de validation d'une valeur de la cible par un pilote de l'aéronef, grâce aux moyens d'interface homme machine (14) ;

   - une mémoire (35) ;
   - des moyens de calcul (16) configurés pour déterminer de façon automatique une trajectoire (30) de vol de l'aéronef en fonction au moins de la position relative de l'aéronef par rapport à la valeur de la cible validée par le pilote et pour enregistrer cette trajectoire dans ladite mémoire ; et
- des moyens de guidage (18) configurés pour guider l'aéronef le long de la trajectoire de vol enregistrée dans ladite mémoire.

12. Système d'aide au pilotage selon la revendication 11 dans lequel l'écran (12) est un dispositif de visualisation tête haute de type HUD.

13. Système d'aide au pilotage selon l'une des revendications 11 ou 12 dans lequel les moyens de guidage (18) comportent un directeur de vol configuré pour commander automatiquement l'affichage, dans le cockpit, d'indications permettant à un pilote de guider l'aéronef le long de la trajectoire de vol enregistrée dans ladite mémoire (35).

14. Système d'aide au pilotage selon l'une des revendications 11 ou 12 dans lequel les moyens de guidage (18) comportent un pilote automatique configuré pour guider automatiquement l'aéronef le long de la trajectoire de vol enregistrée dans ladite mémoire (35).

15. Aéronef comportant un système d'aide au pilotage (1) selon l'une quelconque des revendications 11 à 14.

**Patentansprüche**

1. Lenkhilfeverfahren eines Luftfahrzeugs bei einer Landung auf einer Bodenlandezone, wobei dieses Luftfahrzeug mindestens einen Anzeigebildschirm (12) in seinem Cockpit sowie diesem Bildschirm zugeordnete Mensch-Maschine-Schnittstelleneinrichtungen (14) aufweist, **dadurch gekennzeichnet, dass** es die folgenden Schritte aufweist:

   A) in einer dieser Landung entsprechenden Phase, während der die Bodenlandezone vom Luftfahrzeug aus sichtbar ist:

     A1) Anzeige, auf dem Bildschirm, eines dieser Landung entsprechenden Ziels, in Überlagerung einer Außenansicht des Luftfahrzeugs, wobei die Ansicht eine Ansicht mindestens eines Teils der Bodenlandezone aufweist;
     A2) Empfang eines Änderungsbefehls des Ziels durch einen Piloten des Luftfahrzeugs mittels der diesem Bildschirm zugeordneten Mensch-Maschine-Schnittstelleneinrichtungen (14), und Anzeige des so geänderten Ziels auf diesem Bildschirm;
     A3) Empfang eines Validierungsbefehls eines Werts des Ziels durch einen Piloten des Luftfahrzeugs mittels der diesem Bildschirm zugeordneten Mensch-Maschine-Schnittstelleneinrichtungen (14);

B) automatisches Bestimmen einer Flugbahn (30) des Luftfahrzeugs abhängig von mindestens der relativen Position des Luftfahrzeugs bezüglich des vom Piloten im Schritt A3) validierten Werts des Ziels und Speichern dieser Bahn; und
C) Führen des Luftfahrzeugs entlang dieser im Schritt B) gespeicherten Bahn.

2. Lenkhilfeverfahren nach Anspruch 1, wobei das Ziel enthält:

- einen Zielpunkt am Boden;
- eine Achse einer Rollbahn am Boden; und/oder
- die Neigung (FPA) des letzten Annäherungssegments des Zielpunkts am Boden.

3. Lenkhilfeverfahren nach einem der vorhergehenden Ansprüche, wobei der Bildschirm (12) eine Head-up-Anzeigevorrichtung der Art HUD ist.

4. Lenkhilfeverfahren nach einem der vorhergehenden Ansprüche, wobei die Bodenlandezone einer Landebahn entspricht.

5. Lenkhilfeverfahren nach Anspruch 4, wobei der Wert des im Schritt A1) angezeigten Ziels abhängig von Merkmalen der Landebahn bestimmt wird.

6. Lenkhilfeverfahren nach einem der Ansprüche 1 bis 4, wobei der Wert des im Schritt A1) angezeigten Ziels abhängig von der aktuellen Route des Luftfahrzeugs bestimmt wird.

7. Lenkhilfeverfahren nach einem der vorhergehenden Ansprüche, wobei der Schritt A2) iterativ durchgeführt wird.

8. Lenkhilfeverfahren nach einem der vorhergehenden Ansprüche, wobei:

- der von einem Piloten im Schritt A3) validierte Wert des Ziels gespeichert wird; und
- während des Schritts C) ein Ziel entsprechend dem gespeicherten Wert in Überlagerung der Außenansicht des Luftfahrzeugs angezeigt wird.

9. Lenkhilfeverfahren nach einem der vorhergehenden Ansprüche, wobei die Schritte A2), A3) und B) während des Schritts C) wiederholt werden.

10. Lenkhilfeverfahren nach einem der vorhergehenden Ansprüche, wobei die bestimmte und im Schritt B) gespeicherte Bahn in einem terrestrischen Bezugssystem definiert wird.

11. Lenkhilfesystem (1) eines Luftfahrzeugs, wobei das System mindestens einen Anzeigebildschirm (12) im Cockpit des Luftfahrzeugs sowie diesem Bildschirm zugeordnete Mensch-Maschine-Schnittstelleneinrichtungen (14) aufweist, **dadurch gekennzeichnet, dass** das Lenkhilfesystem aufweist:

- eine Dialogvorrichtung (10) mit einem Piloten, wobei diese Vorrichtung konfiguriert ist, um:

. auf diesem Bildschirm (12) bei einer Landung des Luftfahrzeugs auf einer vom Luftfahrzeug aus sichtbaren Bodenlandezone ein dieser Landung entsprechendes Ziel in Überlagerung einer Außenansicht des Luftfahrzeugs anzuzeigen, wobei die Ansicht eine Ansicht mindestens eines Teils der Bodenlandezone aufweist;
. einen Änderungsbefehl des Ziels durch einen Piloten des Luftfahrzeugs mit Hilfe der Mensch-Maschine-Schnittstelleneinrichtungen (14) zu empfangen, und das so geänderte Ziel anzuzeigen; und
. einen Validierungsbefehl eines Werts des Ziels durch einen Piloten des Luftfahrzeugs mit Hilfe der Mensch-Maschine-Schnittstelleneinrichtungen (14) zu empfangen;

- einen Speicher (35);
- Recheneinrichtungen (16), die konfiguriert sind, automatisch eine Flugbahn (30) des Luftfahrzeugs abhängig mindestens von der relativen Position des Luftfahrzeugs bezüglich des vom Piloten validierten Werts des Ziels zu bestimmen und diese Bahn im Speicher zu speichern; und
- Führungseinrichtungen (18), die konfiguriert sind, das Luftfahrzeug entlang der im Speicher gespeicherten Flugbahn zu führen.

12. Lenkhilfesystem nach Anspruch 11, wobei der Bildschirm (12) eine Head-up-Anzeigevorrichtung der Art HUD ist.

13. Lenkhilfesystem nach einem der Ansprüche 11 oder 12, wobei die Führungseinrichtungen (18) eine Flugleitanlage aufweisen, die konfiguriert ist, die Anzeige im Cockpit von Angaben automatisch zu steuern, die es einem Piloten ermöglichen, das Luftfahrzeug entlang der im Speicher (35) gespeicherten Flugbahn zu führen.

14. Lenkhilfesystem nach einem der Ansprüche 11 oder 12, wobei die Führungseinrichtungen (18) einen Autopiloten aufweisen, der konfiguriert ist, das Luftfahrzeug automatisch entlang der im Speicher (35) gespeicherten Flugbahn zu führen.

**15.** Luftfahrzeug, das ein Lenkhilfesystem (1) nach einem der Ansprüche 11 bis 14 aufweist.

**Claims**

**1.** Method for assisting in the piloting of an aircraft during a landing on a landing area on the ground, this aircraft comprising at least one display screen (12) in its cockpit as well as human-machine interface means (14) associated with this screen, **characterized in that** it comprises the following steps:

A) during a phase corresponding to this landing, during which said landing area on the ground is visible from the aircraft:

A1) displaying, on said screen, a target corresponding to this landing, overlaid on a view outside the aircraft, said view comprising a view of at least a part of the landing area on the ground;
A2) receiving a command to modify the target by a pilot of the aircraft, using the human-machine interface means (14) associated with this screen and displaying the duly modified target on this screen;
A3) receiving a command to validate a value of the target by a pilot of the aircraft, using the human-machine interface means (14) associated with this screen;

B) automatically determining a flight trajectory (30) of the aircraft as a function of at least the relative position of the aircraft in relation to the value of the target validated by the pilot in the step A3) and storing this trajectory; and
C) guiding the aircraft along the trajectory stored in the step B).

**2.** Piloting assistance method according to Claim 1, in which the target comprises:

- a target point on the ground;
- an axis of a taxiing trajectory on the ground; and/or
- the slope (FPA) of the last segment of approach to the target point on the ground.

**3.** Piloting assistance method according to either one of the preceding claims, in which the screen (12) is a head-up display HUD type device.

**4.** Piloting assistance method according to any one of the preceding claims, in which the landing area on the ground corresponds to a landing runway.

**5.** Piloting assistance method according to Claim 4, in which the value of the target displayed in the step A1) is determined as a function of characteristics of the landing runway.

**6.** Piloting assistance method according to any one of Claims 1 to 4, in which the value of the target displayed in the step A1) is determined as a function of the current route of the aircraft.

**7.** Piloting assistance method according to any one of the preceding claims, in which the step A2) is performed iteratively.

**8.** Piloting assistance method according to any one of the preceding claims, in which:

- the value of the target validated by a pilot in the step A3) is stored; and
- during the step C), a target corresponding to said stored value is displayed overlaid on the view outside the aircraft.

**9.** Piloting assistance method according to any one of the preceding claims, in which the steps A2), A3) and B) are repeated during the step C).

**10.** Piloting assistance method according to any one of the preceding claims, in which the trajectory determined and stored in the step B) is defined in a terrestrial reference frame.

**11.** Aircraft piloting assistance system (1), said system comprising at least one display screen (12) in the cockpit of the aircraft as well as human-machine interface means (14) associated with this screen, **characterized in that** said piloting assistance system comprises:

- a device (10) for dialogue with a pilot, this device being configured to:

. display on this screen (12), during a landing of the aircraft on a landing area on the ground visible from the aircraft, a target corresponding to this landing, overlaid on a view outside the aircraft, said view comprising a view of at least a part of the landing area on the ground;
. receiving a command to modify the target by a pilot of the aircraft, using the human-machine interface means (14), and displaying the duly modified target; and
. receiving a command to validate a value of the target by a pilot of the aircraft, using the human-machine interface means (14);

- a memory (35);
- computation means (16) configured to determine automatically a flight trajectory (30) of the aircraft as a function of at least the relative position of the aircraft in relation to the value of the target validated by the pilot and to store this trajectory in said memory; and
- guiding means (18) configured to guide the aircraft along the flight trajectory stored in said memory.

12. Piloting assistance system according to Claim 11, in which the screen (12) is a head-up display HUD type device.

13. Piloting assistance system according to either of Claims 11 and 12, in which the guiding means (18) comprise a flight director configured to automatically control the display, in the cockpit, of indications enabling a pilot to guide the aircraft along the flight trajectory stored in said memory (35).

14. Piloting assistance system according to either of Claims 11 and 12, in which the guiding means (18) comprise an automatic pilot configured to automatically guide the aircraft along the flight trajectory stored in said memory (35).

15. Aircraft comprising a piloting assistance system (1) according to any one of Claims 11 to 14.

EP 2 722 721 B1

Fig. 1

Fig. 2

Fig. 3

EP 2 722 721 B1

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5593114 A